# EUROPÄISCHE PATENTSCHRIFT

(11) **EP 4 189 219 B1**
(45) Veröffentlichungstag und Bekanntmachung des Hinweises auf die Patenterteilung: **17.07.2024**
(21) Anmeldenummer: 21752636.7
(22) Anmeldetag: 29.07.2021
(51) Int. Cl.: F01D 17/16, F04D 29/56, F01D 5/14

(54) **LEITSCHAUFELANORDNUNG FÜR EINE STRÖMUNGSMASCHINE, VERDICHTERMODUL UND STRÖMUNGSMASCHINE**
VANE ASSEMBLY FOR A TURBOMACHINE, COMPRESSOR ASSEMBLY AND TURBOMACHINE
AGENCEMENT D'AUBE STATORIQUE POUR UNE TURBOMACHINE, ENSEMBLE COMPRESSEUR ET TURBOMACHINE

(30) Priorität: 30.07.2020 DE 102020209586
(43) Veröffentlichungstag der Anmeldung: 07.06.2023
(73) Patentinhaber: MTU Aero Engines AG, 80995 München (DE)
(72) Erfinder: HALCOUSSIS, Alexander, 80995 München (DE); SAHOTA, Harsimar, 80995 München (DE)
(86) Internationale Anmeldenummer: PCT/DE2021/100650
(87) Internationale Veröffentlichungsnummer: WO 2022/022780

(56) Entgegenhaltungen:
- EP-A1- 3 124 794
- EP-A1- 3 246 518
- EP-A2- 1 710 395
- CN-A- 104 100 305
- DE-A1- 10 233 033
- US-A1- 2012 315 136
- US-B2- 7 189 056
- US-B2- 9 334 745

## Beschreibung

### Technisches Gebiet

Die vorliegende Erfindung betrifft eine Leischaufelanordnung, ein Verdichtermodul und eine Strömungsmaschine.

### Stand der Technik

Bei der Strömungsmaschine kann es sich bspw. um ein Strahltriebwerk handeln, z. B. um ein Mantelstromtriebwerk. Dieses gliedert sich funktional in Verdichter, Brennkammer und Turbine. Dabei wird angesaugte Luft im Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Dem strömenden Gas wird dabei anteilig auch Energie entzogen, um den Verdichter bzw. im Falle eines Mantelstromtriebwerks auch den Fan anzutreiben. Der vorliegende Gegenstand richtet sich auf eine Leitschaufel und insbesondere auf ein Verdichtermodul.

Die Druckschriften US 9334745B, US 7189056B2, CN 104100305A, EP 1710395A, EP 3124794A und EP 3246518A zeigen Beispiele von festen, nicht drehbaren Leitschaufeln mit gekrümmten Innenwandflächen.

DE 10233603 A1 offenbart den Oberbegriff des Anspruchs 1.

### Darstellung der Erfindung

Der vorliegenden Erfindung liegt das technische Problem zugrunde, eine besonders vorteilhafte Leitschaufelanordnung anzugeben.

Dies wird erfindungsgemäß mit der Leitschaufelanordnung nach Anspruch 1 gelöst. Der Gegenstand richtet sich dabei speziell auf deren Außendeckband, das radial außen am Schaufelblatt angeordnet ist, also mit seiner Innenwandfläche den Gaskanal nach radial außen begrenzt. Dabei ist diese Innenwandfläche des Außendeckbands solchermaßen gestaltet, dass sie in einem Axialschnitt betrachtet einen gekrümmten Verlauf mit einem Wendepunkt hat. Sie hat
- in einem ersten Axialabschnitt vor dem Wendepunkt eine konkave Krümmung und
- in einem zweiten Axialabschnitt nach dem Wendepunkt eine konvexe Krümmung.

Aufgrund der von dem Gaskanal aus betrachtet konkaven Krümmung der Innenwandfläche ist der Ringraum im ersten Axialabschnitt konvex gekrümmt (in dem Axialschnitt betrachtet), hat er also eine konvexe Außenmantelfläche. Entsprechend ist in dem zweiten Axialabschnitt aufgrund der konvexen Krümmung der Innenwandfläche der Ringraum konkav gekrümmt (in dem Axialschnitt betrachtet), hat er also eine konkave Außenmantelfläche. Betrachtet man die Kontraktion, also das Ringraum-Flächenverhältnis eines jeweiligen Rotors zwischen dessen Hinter- und Vorderkante, wird mit diesem Innenwand- bzw. Ringraumverlauf im Stator die Kontraktion des dem Stator vorgelagerten Rotors etwas erhöht.

Mit der stärkeren Kontraktion, also Verjüngung der Ringraumfläche entlang des Gitters, sinkt die Schaufelbelastung (De-Haller-Zahl bzw. V2/V1 wird größer, weil V2 größer wird), was bspw. hinsichtlich Stabilität und Wirkungsgrad vorteilhaft sein kann. Bezogen auf ein Verdichtermodul im Gesamten lässt sich die Kontraktion eines Gitters für sich betrachtet jedoch nicht beliebig erhöhen, weil dies zulasten der Kontraktion der benachbarten Gitter geht. Mit dem vorliegenden Verlauf, also dem Wechsel zwischen konkaver und konvexer Krümmung, wird die Kontraktion des nachgelagerten Rotors etwas verringert, um die Kontraktion des vorgelagerten Rotors zu erhöhen. In der Gesamtschau beobachten die Erfinder hierbei einen positiven Effekt auf den Stufenwirkungsgrad.

Bevorzugte Ausführungsformen finden sich in den abhängigen Ansprüchen und der gesamten Offenbarung, wobei in der Darstellung der Merkmale nicht immer im Einzelnen zwischen den unterschiedlichen Anspruchskategorien unterschieden wird. Wird bspw. eine Leitschaufel beschrieben, ist dies ebenso auf eine Leitschaufelanordnung mit einer solchen Leitschaufel und einem Gehäuseelement oder auch auf ein Verdichtermodul bzw. eine Strömungsmaschine mit entsprechender Leitschaufel zu lesen.

Die Angaben "axial", "radial" und "umlaufend", sowie die zugehörigen Richtungen (Axialrichtung etc.), beziehen sich im Rahmen dieser Offenbarung auf die Längsachse der Strömungsmaschine. Diese fällt bspw. mit einer Rotoren-Drehachse zusammen, um welche die Rotoren im Betrieb drehen. Der "Axialschnitt" betrifft eine Schnittebene, welche die Längsachse beinhaltet, also einen Längsschnitt. Bevorzugt hat die Innenwandfläche der Außenplattform in sämtlichen Axialschnitten betrachtet einen entsprechenden Verlauf mit Wendepunkt, besonders bevorzugt gilt dies für den gesamten Ringraum des Leitgitters, also für alle umlaufend aufeinanderfolgenden Leitschaufeln.

Gemäß einer bevorzugten Ausführungsform liegt der Wendepunkt in den vorderen 40 % der radial auf Höhe der Innenwandfläche genommenen axialen Sehnenlänge. Die axiale Sehnenlänge wird in einem Tangentialschnitt genommen, der radial auf Höhe der Innenwandfläche liegt, also am radial äußeren Ende der Hinterkante. Sie ergibt sich dann als Axialanteil der Verbindungslinie zwischen Vorder- und Hinterkante, wobei im Falle der quantitativen Betrachtungen 0 % auf Höhe der Vorderkante und 100 % auf Höhe der Hinterkante liegen.

In bevorzugter Ausgestaltung liegt der Wendepunkt axial nach den ersten 10 % der axialen Sehnenlänge, besonders bevorzugt liegt er in einem Bereich zwischen 25 % und 30 % der axialen Sehnenlänge.

Gemäß der Erfindung ist die Leitschaufel Teil einer Leitschaufelanordnung mit einem Gehäuseelement, an dem die Leitschaufel zur Einstellung ihres Anströmwinkels verstellbar gelagert ist. Sie ist also in dieser Lagerung um eine Leitschaufel-Drehachse drehbar, was bspw. mit einem Zapfen radial außen an der Außenplattform und einem weiteren Zapfen radial innen an der Innenplattform realisiert sein kann. Unabhängig von diesen Details durchsetzt die Leitschaufel-Drehachse die Außenplattform, sie kann bezogen auf die Längsachse der Strömungsmaschine z. B. im Wesentlichen radial liegen. Bei einer solchen verstellbaren Leitschaufel liegt der Wendepunkt der Innenwandfläche erfindungsgemäß axial vor der Leitschaufel-Drehachse (axial bezogen auf die Längsachse). In dem bzw. den einzelnen Axialschnitten, in denen der hauptanspruchsgemäße Krümmungsverlauf betrachtet wird, wird die Leitschaufel-Drehachse dabei als Umlaufprojektion betrachtet, also in Umlaufrichtung in die jeweilige Schnittebene projiziert.

In bevorzugter Ausgestaltung liegt die Leitschaufel-Drehachse hinter den ersten 20 % und/oder in den vorderen 55 % der axialen Sehnenlänge, besonders bevorzugt liegt sie zwischen 35 % und 45 % der axialen Sehnenlänge.

Die Erfindung betrifft auch ein Verdichtermodul, wobei die vorliegend offenbarte Leitschaufel Teil eines Leitschaufelkranzes, also Leitgitters ist. Bevorzugt sind sämtliche Leitschaufeln des Kranzes mit einem entsprechenden Krümmungsverlauf gefasst, besonders bevorzugt sind sie untereinander baugleich. Unabhängig davon weist das Verdichtermodul dem Leitgitter vorgelagert ein erstes Laufgitter und dem Leitgitter nachgelagert ein zweites Laufgitter auf. Es wird auf die Vorteilsangaben eingangs verwiesen. Bei dem ersten Laufgitter kann es sich insbesondere um das erste Laufgitter des Moduls insgesamt handeln.

Die Erfindung betrifft ferner eine Strömungsmaschine mit einer entsprechenden Leitschaufel bzw. Leitschaufelanordnung, insbesondere ein Flugtriebwerk. Bei Letzterem kann es sich bevorzugt um ein Mantelstromtriebwerk handeln.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und weiterhin nicht im Einzelnen zwischen den unterschiedlichen Anspruchskategorien unterschieden wird.

Im Einzelnen zeigt
- Figur 1: eine Strömungsmaschine, nämlich ein Mantelstromtriebwerk in einem schematischen Axialschnitt;
- Figur 2: eine erfindungsgemäße Leitschaufel in einem schematischen Axialschnitt;
- Figur 3: einen Teil eines Verdichtermoduls mit der Leitschaufel gemäß 2.

### Bevorzugte Ausführung der Erfindung

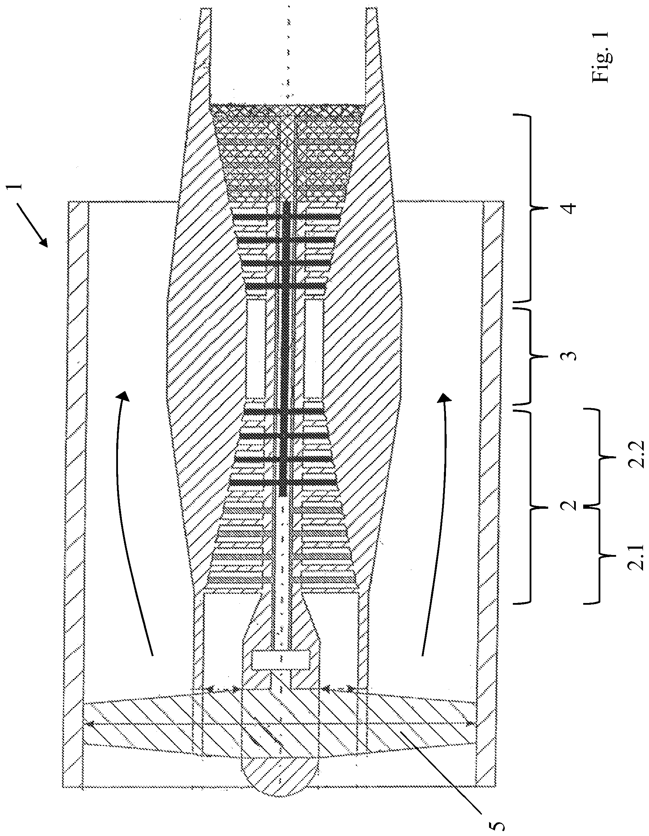

**Figur** 1 zeigt eine Strömungsmaschine 1, konkret ein Mantelstromtriebwerk in einem Axialschnitt. Es gliedert sich funktional in Verdichter 2, Brennkammer 3 und Turbine 4. In dem Verdichter 2, der aus einem Niederdruckverdichter 2.1 und einem Hochdruckverdichter 2.2 aufgebaut ist, wird angesaugte Luft komprimiert. In der Brennkammer 3 wird dann Kerosin hinzugemischt und wird diese Mischung verbrannt. Das Heißgas wird in der Turbine 4 expandiert, wobei dem Heißgas anteilig Energie entzogen wird (über die Bewegung der Rotoren). Diese wird zum einen zum Antreiben der Rotoren der Verdichters 2 genutzt, zum anderen zum Antreiben des Fans 5, der wesentlich den Vorschub des Mantelstromtriebwerks 1 erzeugt.

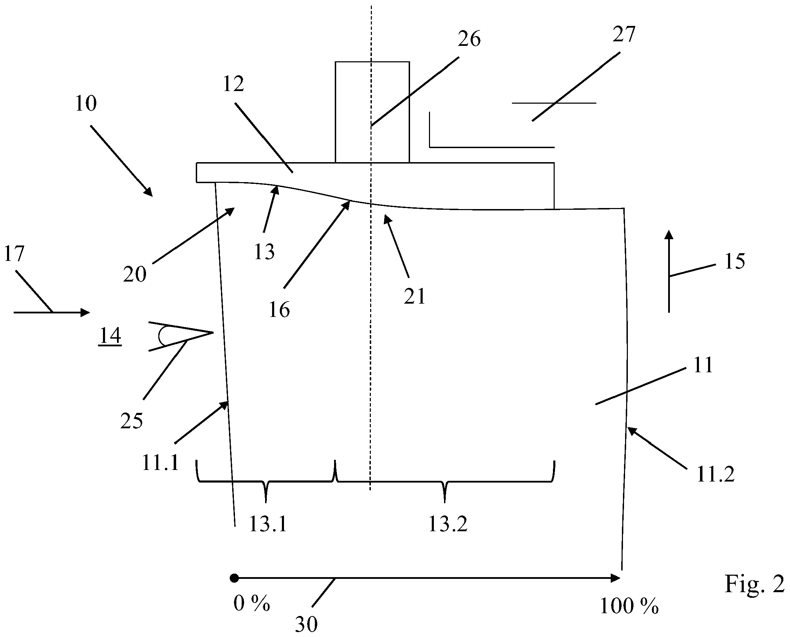

**Figur** 2 zeigt eine erfindungsgemäße Leitschaufel 10 mit einem Leitschaufelblatt 11 und einer Außenplattform 12. Mit einer Innenwandfläche 13 begrenzt die Außenplattform 12 den Gaskanal 14 radial 15. Diese Innenwandfläche 13 hat erfindungsgemäß einen gekrümmten Verlauf mit einem Wendepunkt 16. In einem ersten Axialabschnitt 13.1, der bezogen auf eine Durchströmung 17 des Gaskanals 14 stromaufwärts des Wendepunkts 16 liegt, hat sie eine konkave Krümmung 20, und in dem nachgelagerten zweiten Axialabschnitt 13.2 eine konvexe Krümmung 21. Der Ringraum ist komplementär, also in dem ersten Axialabschnitt 13.1 konvex und in dem zweiten Axialabschnitt 13.2 konkav gekrümmt.

Die Leitschaufel 10 ist zur Einstellung eines Anströmwinkels 25 verstellbar ausgeführt, also um eine Leitschaufel-Drehachse 26 verdrehbar an einem Gehäuseelement 27 gelagert. Der Wendepunkt 16 liegt axial vor der Leitschaufel-Drehachse 26, bezogen auf eine zwischen Vorder- und Hinterkante 11.1,11.2 des Leitschaufelblatts 11 genommene axiale Sehnenlänge 30 liegt der Wendepunkt 16 in einem Bereich zwischen 25 % und 30 % der axialen Sehnenlänge.

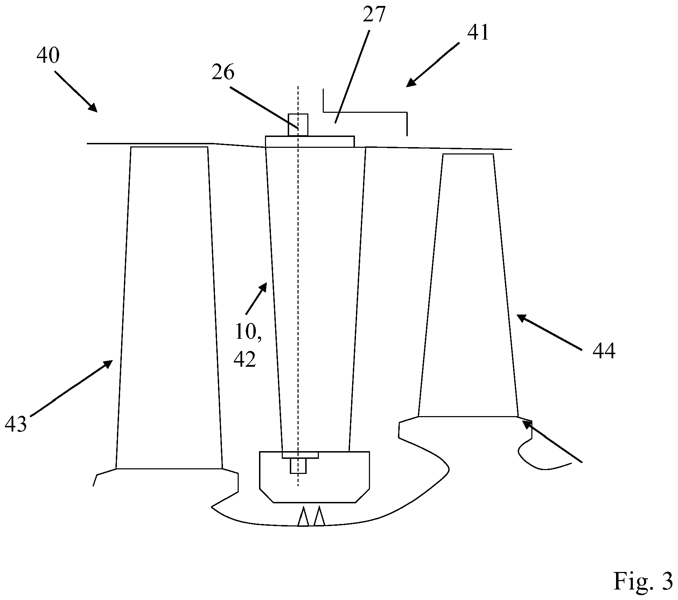

**Figur** 3 zeigt einen Teil eines Verdichtermoduls 40 mit der anhand von Figur 2 im Detail diskutierten Leitschaufel 10, die gemeinsam mit dem Gehäuseelement 27 eine Leitschaufelanordnung 41 darstellt. Die Leitschaufel 10 ist Teil eines Leitschaufelkranzes 42, also Leitgitters (Stator). Diesem ist ein erster Laufschaufelkranz 43 vorgelagert und ein zweiter Laufschaufelkranz 44 nachgelagert (also jeweils ein Laufgitter, also Rotor). Wie in der Beschreibungseinleitung im Einzelnen dargelegt, wird mit dem gekrümmten Verlauf der Innenwandfläche 13 die Kontraktion des ersten Laufschaufelkranzes 43 zulasten der Kontraktion des zweiten Laufschaufelkranzes 44 erhöht, was in der Gesamtschau den Stufenwirkungsgrad verbessert.

**BEZUGSZEICHENLISTE**

| | | | |
|---|---|---|---|
| Strömungsmaschine | | | 1 |
| Verdichter | | | 2 |
| | Niederdruckverdichter | | 2.1 |
| | Hochdruckverdichter | | 2.2 |
| Brennkammer | | | 3 |
| Turbine | | | 4 |
| Fan | | | 5 |
| Leitschaufel | | | 10 |
| Leitschaufelblatt | | | 11 |
| | Vorderkante | | 11.1 |
| | Hinterkante | | 11.2 |
| Außenplattform | | | 12 |
| Innenwandfläche | | | 13 |
| | Erster Axialabschnitt | | 13.1 |
| | Zweiter Axialabschnitt | | 13.2 |
| Gaskanal | | | 14 |
| Radiale Richtung | | | 15 |
| Wendepunkt | | | 16 |
| Durchströmung | | | 17 |
| Konkave Krümmung | | | 20 |
| Konvexe Krümmung | | | 21 |
| Anströmwinkel | | | 25 |
| Leitschaufel-Drehachse | | | 26 |
| Gehäuseelement | | | 27 |
| Sehnenlänge | | | 30 |
| Verdichtermodul | | | 40 |
| Leitschaufelanordnung | | | 41 |
| Leitschaufelkranz | | | 42 |
| | Erster | | |
| | Leitschaufelkranz | 43 | |
| | Zweiter Leitschaufelkranz | | 44 |

## Patentansprüche

1. Leitschaufelanordnung (41) mit einer Leitschaufel (10) zum Anordnen in einem Gaskanal (14) einer Strömungsmaschine (1), wobei die Leitschaufel (10) ein Leitschaufelblatt (11) und eine Außenplattform (12), die bezogen auf eine Längsachse (2) der Strömungsmaschine (1) radial außen an dem Leitschaufelblatt (11) angeordnet ist, aufweist, und einem Gehäuseelement (27), an welchem die Leitschaufel (10) zur Einstellung eines Anströmwinkels (25) verstellbar, also um eine die Außenplattform (12) durchsetzende Leitschaufel-Drehachse (26) drehbar gelagert ist,
wobei die Außenplattform (12) den Gaskanal (14) mit einer Innenwandfläche (13) nach radial außen begrenzt,
welche Innenwandfläche (13) in einem Axialschnitt betrachtet einen gekrümmten Verlauf mit einem Wendepunkt (16) hat, nämlich
- in einem ersten Axialabschnitt (13.1), der bezogen auf eine Durchströmung (17) des Gaskanals (14) stromaufwärts des Wendepunkts (16) liegt, eine konkave Krümmung (20) hat, und
- in einem zweiten Axialabschnitt (13.2), der bezogen auf die Durchströmung (17) des Gaskanals (14) stromabwärts des Wendepunkts (16) angeordnet ist, eine konvexe Krümmung (21) hat,
**dadurch gekennzeichnet, dass**
der Wendepunkt (16) des gekrümmten Verlaufs der Innenwandfläche (13) bezogen auf die Längsachse (2) der Strömungsmaschine (1) axial vor der Leitschaufel-Drehachse (26) liegt.

2. Leitschaufelanordnung (41) nach Anspruch 1, bei welcher der Wendepunkt (16) bezogen auf eine axiale Sehnenlänge (30), die radial auf Höhe der Innenwandfläche (13) genommen wird und von 0 % an der Vorderkante (11.1) zu 100 % an der Hinterkante (11.2) reicht, in einem Bereich zwischen 0 % und 40 % der axialen Sehnenlänge (30) liegt.

3. Leitschaufelanordnung (41) nach Anspruch 2, bei welcher der Wendepunkt (16) in einem Bereich zwischen 10 % und 40 % der axialen Sehnenlänge (30) liegt.

4. Leitschaufelanordnung (41) nach Anspruch 3, bei welcher der Wendepunkt (16) in einem Bereich zwischen 25 % und 30 % der axialen Sehnenlänge (30) liegt.

5. Leitschaufelanordnung (41) nach Anspruch 1 bis 4, bei welcher die Leitschaufel-Drehachse (26) bezogen auf eine axiale Sehnenlänge (30), die radial auf Höhe der Innenwandfläche (13) genommen wird und von 0 % an der Vorderkante (11.1) zu 100 % an der Hinterkante (11.2) reicht, in einem Bereich zwischen 35 % und 45 % der axialen Sehnenlänge (30) liegt.

6. Verdichtermodul (40) mit einer Leitschaufelanordnung (41) nach Anspruch 1 bis 5, bei welchem die Leitschaufel (10) Teil eines Leitschaufelkranzes (42) ist, wobei dem Leitschaufelkranz in dem Verdichtermodul (40) ein erster Laufschaufelkranz (43) vorgelagert und ein zweiter Laufschaufelkranz (44) nachgelagert angeordnet ist.

7. Verdichtermodul (40) nach Anspruch 6, in welchem dem Leitschaufelkranz (42) mit der Leitschaufel (10) genau ein Laufschaufelkranz (43) vorgelagert ist.

8. Strömungsmaschine (1), insbesondere Flugtriebwerk, mit einer Leitschaufelanordnung (41) nach Anspruch 1 bis 5, oder einem Verdichtermodul (40) nach Anspruch 6 oder 7.

## Claims

1. Guide vane arrangement (41) comprising a guide vane (10) for being arranged in a gas channel (14) of a turbomachine (1), the guide vane (10) comprising a guide vane blade (11) and an outer platform (12), which is arranged radially on the outside of the guide vane blade (11) with respect to a longitudinal axis (2) of the turbomachine (1), and a housing element (27), on which the guide vane (10) is mounted in an adjustable manner, i.e. rotatably about a guide vane axis of rotation (26) passing through the outer platform (12), for setting a flow angle (25),
the outer platform (12) radially outwardly delimiting the gas channel (14) by means of an inner wall surface (13),
which inner wall surface (13), when viewed in an axial section, has a curved profile having an inflection point (16), specifically
- has a concave curvature (20) in a first axial portion (13.1) which is upstream of the inflection point (16) with respect to a flow (17) through the gas channel (14), and
- has a convex curvature (21) in a second axial portion (13.2) which is downstream of the inflection point (16) with respect to the flow (17) through the gas channel (14),
**characterized in that**
the inflection point (16) of the curved profile of the inner wall surface (13) is located axially in front of the guide vane axis of rotation (26) with respect to the longitudinal axis (2) of the turbomachine (1).

2. Guide vane arrangement (41) according to claim 1, in which the inflection point (16), with respect to an axial chord length (30) which is measured radially at the level of the inner wall surface (13) and ranges from 0% at the leading edge (11.1) to 100% at the trailing edge (11.2), lies in a range between 0% and 40% of the axial chord length (30).

3. Guide vane arrangement (41) according to claim 2, in which the inflection point (16) lies in a range between 10% and 40% of the axial chord length (30).

4. Guide vane arrangement (41) according to claim 3, in which the inflection point (16) lies in a range between 25% and 30% of the axial chord length (30).

5. Guide vane arrangement (41) according to claims 1 to 4, in which the guide vane axis of rotation (26), with respect to an axial chord length (30) which is measured radially at the level of the inner wall surface (13) and ranges from 0% at the leading edge (11.1) to 100% at the trailing edge (11.2), lies in a range between 35% and 45% of the axial chord length (30).

6. Compressor module (40) comprising a guide vane arrangement (41) according to claims 1 to 5, in which the guide vane (10) is part of a guide vane ring (42), wherein a first guide vane ring (43) is arranged upstream and a second vane ring (44) is arranged downstream of the guide vane ring in the compressor module (40).

7. Compressor module (40) according to claim 6, in which precisely one guide vane ring (43) is arranged upstream of the guide vane ring (42) having the guide vane (10).

8. Turbomachine (1), in particular aircraft engine, having a guide vane arrangement (41) according to claims 1 to 5, or a compressor module (40) according to either claim 6 or claim 7.

## Revendications

1. Agencement d'aubes directrices (41) comportant une aube directrice (10) destinée à être disposée dans un canal de gaz (14) d'une turbomachine (1), dans lequel l'aube directrice (10) présente une lame d'aube directrice (11) et une plateforme extérieure (12) qui est disposée radialement à l'extérieur de la lame d'aube directrice (11) par rapport à un axe longitudinal (2) de la turbomachine (1), et un élément de boîtier (27) sur lequel l'aube directrice (10) est montée de manière réglable pour le réglage d'un angle d'afflux (25), c'est-à-dire de manière à pouvoir tourner autour d'un axe de rotation (26) d'aube directrice traversant la plateforme extérieure (12),
dans lequel la plateforme extérieure (12) délimite le canal de gaz (14) avec une surface de paroi intérieure (13) vers l'extérieur dans le sens radial,
laquelle surface de paroi intérieure (13), vue en coupe axiale, a un tracé incurvé comportant un point d'inflexion (16), à savoir
- a une courbure concave (20) dans une première section axiale (13.1) qui est située en amont du point d'inflexion (16) par rapport à un passage (17) du canal de gaz (14), et
- a une courbure convexe (21) dans une seconde section axiale (13.2) qui est disposée en aval du point d'inflexion (16) par rapport au passage (17) du canal de gaz (14),
**caractérisé en ce que**
le point d'inflexion (16) du tracé incurvé de la surface de paroi intérieure (13) se trouve, par rapport à l'axe longitudinal (2) de la turbomachine (1), axialement devant l'axe de rotation (26) d'aube directrice.

2. Agencement d'aubes directrices (41) selon la revendication 1, dans lequel le point d'inflexion (16), par rapport à une longueur de corde axiale (30) prise radialement au niveau de la surface de paroi intérieure (13) et allant de 0 % au niveau du bord d'attaque (11.1) à 100 % au niveau du bord de fuite (11.2), est situé dans une plage comprise entre 0 % et 40 % de la longueur de corde axiale (30).

3. Agencement d'aubes directrices (41) selon la revendication 2, dans lequel le point d'inflexion (16) est situé dans une plage comprise entre 10 % et 40 % de la longueur de corde axiale (30).

4. Agencement d'aubes directrices (41) selon la revendication 3, dans lequel le point d'inflexion (16) est situé dans une plage comprise entre 25 % et 30 % de la longueur de corde axiale (30).

5. Agencement d'aubes directrices (41) selon les revendications 1 à 4, dans lequel l'axe de rotation (26) d'aube directrice, par rapport à une longueur de corde axiale (30) prise radialement au niveau de la surface de paroi intérieure (13) et allant de 0 % au niveau du bord d'attaque (11.1) à 100 % au niveau du bord de fuite (11.2), est situé dans une plage comprise entre 35 % et 45 % de la longueur de corde axiale (30).

6. Module compresseur (40) comportant un Agencement d'aubes directrices (41) selon les revendications 1 à 5, dans lequel l'aube directrice (10) fait partie d'une couronne d'aubes directrices (42), dans lequel une première couronne d'aubes directrices (43) est disposée en amont et une seconde couronne d'aubes directrices (44) est disposée en aval de la couronne d'aubes directrices dans le module compresseur (40).

7. Module compresseur (40) selon la revendication 6, dans lequel une couronne d'aubes directrices (43) est placée exactement en amont de la couronne d'aubes directrices (42) comportant l'aube directrice (10).

8. Turbomachine (1), notamment moteur d'avion, comportant un Agencement d'aubes directrices (41) selon les revendications 1 à 5, ou un module compresseur (40) selon la revendication 6 ou 7.
